# EUROPEAN PATENT SPECIFICATION

(11) **EP 1 415 905 B1**
(45) Date of publication and mention of the grant of the patent: **15.07.2009**
(21) Application number: 03022582.5
(22) Date of filing: 02.10.2003
(51) Int. Cl.: B62M 27/02

(54) **Suspension unit and snowmobile comprising a suspension unit**
Federungseinheit und Schneemobil mit einer solchen Federungseinheit
Dispositif de suspension et scooter des neiges avec un tel dispositif

(30) Priority: 31.10.2002 JP 2002316917
(43) Date of publication of application: 06.05.2004
(73) Proprietor: Yamaha Hatsudoki Kabushiki Kaisha, Iwata-shi, Shizuoka-ken (JP)
(72) Inventor: Takashi, Imamura, Yamaha Hatsudoki Kabushiki Kaisha, Shizuoka-ken (JP); Makoto, Ichikawa, Yamaha Hatsudoki Kabushiki Kaisha, Shizuoka-ken (JP)
(74) Representative: Grünecker, Kinkeldey, Stockmair & Schwanhäusser Anwaltssozietät

(56) References cited:
- US-A1- 4 301 884
- US-A1- 5 265 692
- US-B1- 6 206 124

## Description

The present invention relates to a suspension unit, in particular for a rear section of a snowmobile, comprising a four-node link, wherein respective upper end portions of a front torque arm and of a rear torque arm are rotatably connected to a body frame, and wherein respective lower end portions of the front torque arm and of the rear torque arm are rotatably connected to a drive unit disposed below said body frame. Further, the invention relates to a snowmobile comprising a body, a steering device arranged at a front end of the body and a drive section disposed at a rear end of the body. Such a suspension unit is shown in US-A-5,265,692 and in US-B-6,206,124.

Conventionally a snowmobile has a pair of right and left slide rails for guiding a propulsion track belt under its body frame. A shock absorber and a link mechanism are interposed between the body frame and the slide rails so that the vertical distance between the body frame and the slide rails can be increased and decreased. Thereby, pitching of the body frame, during high-speed running in particular, can be minimized and the attitude of the body can be stabilized in spite of the unevenness of the surface on which the snowmobile is running.

As such a link mechanism, a rear suspension structure for a snowmobile employing a four-node link having a generally parallelogram configuration is known.

Fig. 10 shows an example of a conventional rear suspension for a snowmobile, as disclosed in JP-A-H09-142344.

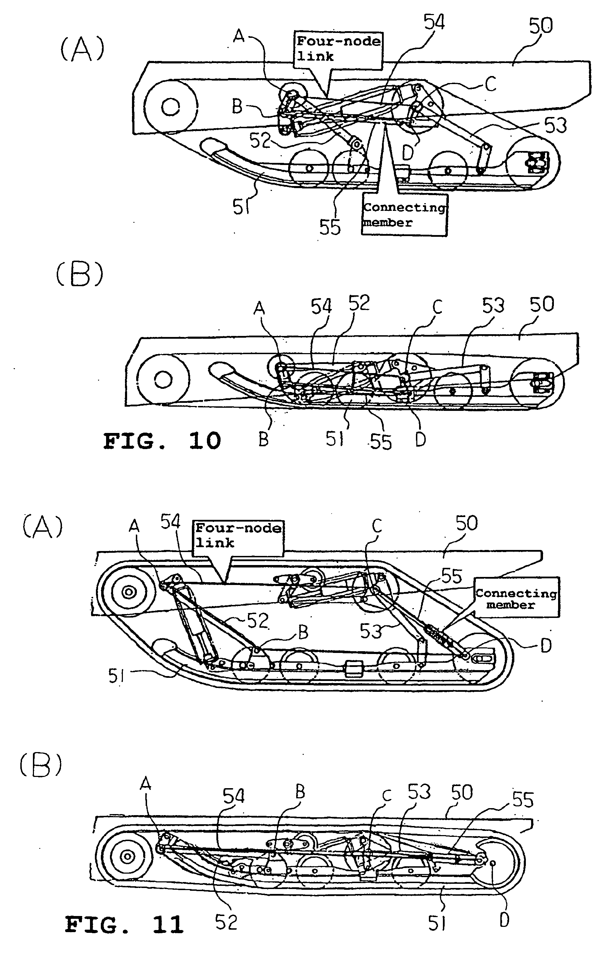

In the conventional example, a front torque arm 52, a rear torque arm 53, and a four-node link 54 comprising four nodes A, B, C, and D and having a generally parallelogram configuration are interposed between a body frame 50 and a slide rail 51 as shown in FIG. 10(A). A connecting member 55 comprising an extendable rod is provided between the nodes B and D.

When the distance between the body frame 50 and the slide rail 51 is reduced to the minimum, the four-node link 54 and the front and rear torque arms 52 and 53 are changed in shape and the parallelogram is changed in shape from a parallelogram inclined rearward as shown in Fig. 10(A) to a parallelogram slightly inclined forward as shown in Fig. 10(B) to decrease the distance between the body frame 50 and the slide rail 51.

Fig. 11 shows another example of a conventional rear suspension for a snowmobile, as described in the Japanese Patent No. 3245314.

In this second conventional example, a front torque arm 52, a rear torque arm 53, and a four-node link 54 comprising four nodes A, B, C, and D and having a generally parallelogram configuration are interposed between a body frame 50 and a slide rail 51 as shown in FIG. 11(A). A connecting member 55 comprising an extendable rod is provided between the nodes C and D.

When the distance between the body frame 50 and the slide rail 51 is reduced to the minimum, the four-node link 54 and the front and rear torque arms 52 and 53 are changed in shape until the parallelogram becomes flat to decrease the distance between the body frame 50 and the slide rail 51 as shown in Fig. 11(B).

In the case of the rear suspension structure shown in Fig. 10, however, since almost the whole four-node link 54 is located inside the body frame 50 and the parallelogram thereof is small in configuration, large force is exerted on the nodes and the connecting member when the four-node link is contracted. Thus, the nodes, the connecting member, and the other members must have large strength. Also, since the extendable length of the connecting member cannot be large, the slide rail can be adjusted only through a small angle with respect to the body frame and the surface on which the snowmobile is running. Thus, the snowmobile cannot be necessarily kept in a sufficiently stable, optimum running attitude.

In the case of the rear suspension structure shown in Fig. 11, although the parallelogram of the four-node link is large, the sides of the parallelogram are overlapped on one line in its most contracted state shown in Fig. 11(B). Thus, the four-node link cannot maintain sufficient strength and cannot properly function as a four-node link against pitching.

Accordingly, it is an objective of the invention to provide a suspension unit for a vehicle, in particular for a snowmobile as indicated above assessing improved driving characteristics with respect to stability and comfort of such a vehicle.

Further, it is an object of the invention to provide a snowmobile of the type as indicated above having improved driving characteristics and maneuvering capabilities.

Regarding a suspension unit of the above type this objective according to the invention is solved by a suspension unit as defined in claim 1. Preferred embodiments are defined in the dependent claims.

According to the constitution, the four-node link can be large in configuration, and the load exerted on each part of the link structure can be decreased. Thus, the rear suspension can be reduced in weight and cost. Also, since the four-node link can keep a parallelogram configuration even in its most contracted state, the rear suspension exhibits sufficient strength and can ensure a comfortable ride. In addition, the rear suspension exhibits an effect of moderately reducing pitching within a practical range.

According to a preferred embodiment of the invention said connecting means can be extended and contracted within a predetermined range.

Preferably said front torque arm comprises a lower front interlocking part formed at a lower end portion thereof and rotatable integrally therewith.

More preferably said lower front interlocking part is formed in the vicinity of a connecting shaft which rotatably connects the lower end portion of the front torque arm to the drive unit.

According to a further embodiment said rear torque arm comprises a lower rear interlocking part formed at a lower end portion thereof and rotatable integrally therewith.

Therein said lower rear interlocking part may be formed in the vicinity of a connecting shaft which rotatably connects the lower end portion of the rear torque arm to the drive unit.

It is possible that said rear torque arm comprises a curved part in the vicinity of its lower end portion, the lower rear interlocking part being provided on said curved part.

Moreover, said connecting means can be provided between an end section of said front interlocking part and said rear interlocking part.

Preferably said drive unit comprises a pair of right and left slide rails for guiding a propulsion track belt.

Thereby a pair of right and left front torque arms and a pair of right and left rear torque arms are arranged between the body frame and the respective right and left slide rails of the drive unit.

In such an embodiment only one connecting means may be provided between the pairs of torque arms, being disposed between said right and left slide rails.

According to the constitution of the suspension unit, the number of parts of the connecting means can be reduced. Thus, the connecting means can be simplified in structure and length adjustment and attachment thereof can be facilitated.

Said connecting means is arranged between a lower front shaft and a lower rear shaft of the four-node link.

Preferably, said connecting means comprises a shock absorber.

In another preferred embodiment, the connecting means has a shock absorbing function.

According to the constitution, since the connecting means has a shock absorbing function, space can be used efficiently and the degree of freedom in laying out the parts around the link is improved as compared with the case where a shock absorber is separately provided. The shock absorbing function improves the ability of the rear suspension to adhere to the road surface during low-speed running and reduces pitching of the slide rails or the body frame during high-speed running.

According to still another embodiment said front torque arm comprises an upper front interlocking part formed at an upper end portion thereof and rotatable integrally therewith.

Preferably said upper front interlocking part is formed in the vicinity of a connecting shaft which rotatably connects the upper end portion of the front torque arm to the body frame.

Also, said rear torque arm may comprise an upper rear interlocking part formed at an upper end portion thereof and rotatable integrally therewith.

Therein, said upper rear interlocking part is formed in the vicinity of a connecting shaft which rotatably connects the upper end portion of the rear torque arm to the body frame.

Moreover, said further connecting means, preferably comprising a shock absorber, is provided between an end section of said upper front interlocking part and an end section of said upper rear interlocking part.

Alternatively or additionally two shock absorbing means are attached to said front torque arm and to said rear torque arm, respectively.

Regarding a snowmobile of the type as indicated above, said objective according to the present invention is performed by applying a suspension unit, in particular for a rear section of a snowmobile, comprising a four-node link, wherein respective upper end portions of a front torque arm and of a rear torque arm are rotatably connected to a body frame, and wherein respective lower end portions of the front torque arm (19) and of the rear torque arm are rotatably connected to a drive unit disposed below said body frame, wherein said four-node link further comprises a connecting means of a variable length which is rotatably connected to the respective lower end portions of the front torque arm and of the rear torque arm.

Preferably, such a snowmobile comprises a suspension unit according to at least one of the embodiments described above.

By providing such a snowmobile having such a suspension unit employing a four-node link with a quadrilateral configuration which is sufficiently large to disperse load and thus exhibits improved strength against load and which always maintains a quadrilateral configuration and thus can be extended and contracted in an optimum manner, the structure having simple and thus light structure and improves the riding comfort.

Further embodiments of the invention are subject to the subclaims.

In the following the invention will be described in greater detail by means of preferred embodiments with reference to the accompanying drawings. Therein:
- Fig. 1: is a view illustrating entire structure of a snowmobile according to the present invention;
- Fig. 2: is an explanatory view of basic structure of a rear suspension according to the present invention;
- Fig. 3: is a side view of the rear suspension according to the present invention;
- Fig. 4: is a plan view of the rear suspension shown in Fig. 3;
- Fig. 5: is a perspective view of the rear suspension shown in Fig. 3, as seen obliquely from the front;
- Fig. 6: is a perspective view of the rear suspension shown in Fig. 3, as seen obliquely from the rear;
- Fig. 7: is a sequential explanatory view illustrating running behavior of the rear suspension for a snowmobile according to the present invention;
- Fig. 8: is a sequential explanatory view illustrating the running behavior of the rear suspension for a snowmobile according to the present invention;
- Fig. 9: is a sequential explanatory view illustrating the running behavior of the rear suspension for a snowmobile according to the present invention;
- Fig. 10: is an explanatory view of a conventional rear suspension; and
- Fig. 11: is an explanatory view of another conventional rear suspension.

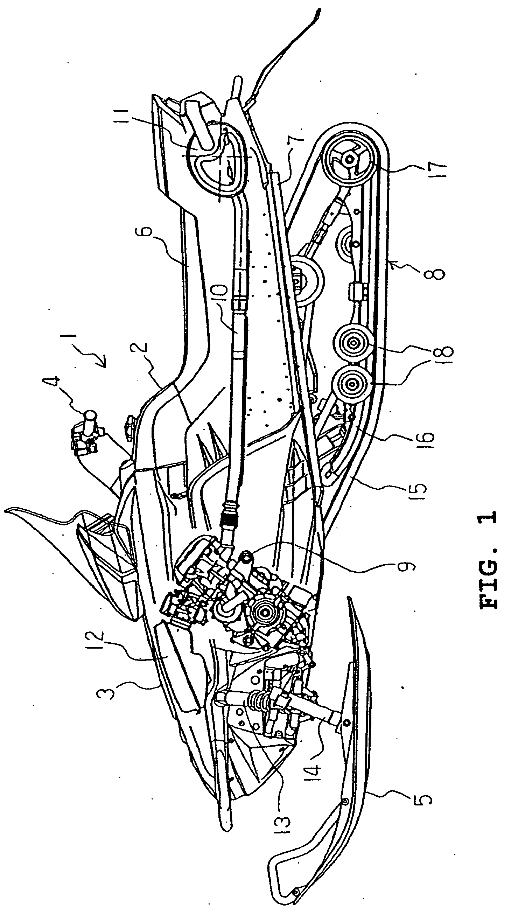

In the drawings Fig. 1 is a view illustrating the entire structure of a snowmobile to which the present invention is applied.

A snowmobile 1 has a body 2 having a front part covered with a cowling 3, and steering skis 5 provided thereunder via shock absorbers 13. The steering skis 5 are connected to handlebars 4 via a steering system (not shown) and rotatable about a steering shaft 14. An engine 9 is accommodated in the cowling 3 and exhaust gas from the engine 9 is exhausted through an exhaust pipe 10 and a muffler 11. Designated as 12 is an air cleaner.

The body 2 has a rear part on which a seat 6 is mounted, and a rear suspension unit 8 attached to a body frame 7 located thereunder. The rear suspension unit 8 has an endless track belt 15 which is driven by a driving wheel (not shown) connected to the engine 9 and a drive unit comprising a pair of right and left slide rails 16 for guiding the running surface of the track belt 15. The track belt 15 is mounted around a plurality of guide wheels 17 and idler wheels 18 and guided thereby.

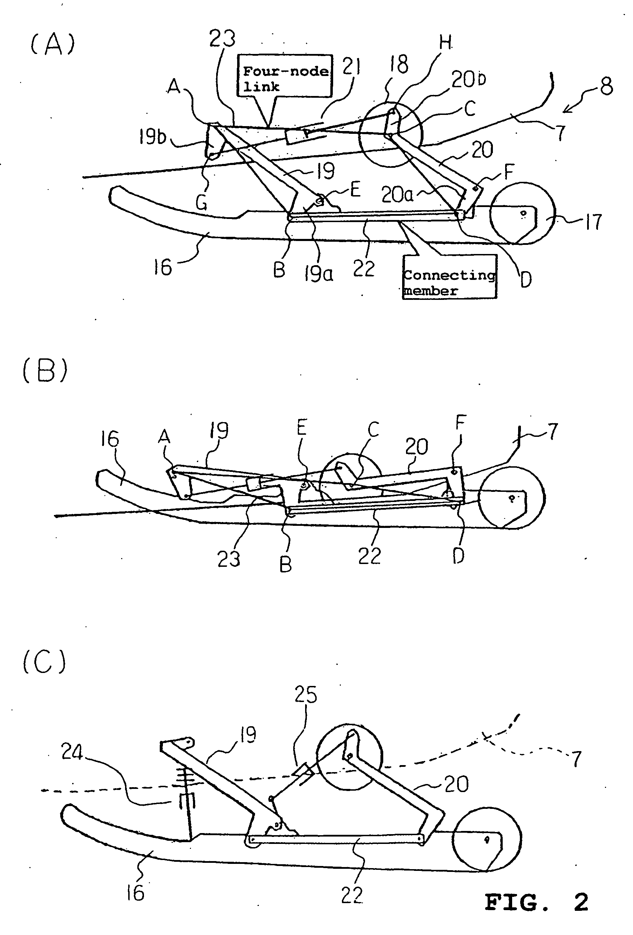

Fig. 2 is a basic structural view of the rear suspension according to the present invention.

As shown in Fig. 2(A), the body frame 7 and the slide rail 16 are connected by a front torque arm 19 and a rear torque arm 20 via connecting shafts A, E, C, and F at upper and lower ends of the front and rear torque arms 19 and 20, thus forming a four-node link A, E, C, F. The front torque arm 19 has an interlocking part 19a formed integrally therewith and protruded more forward and downward than the connecting shaft E at the lower end thereof and an interlocking part 19b formed integrally therewith and bent downward at the connecting shaft A at the upper end thereof. The rear torque arm 20 has an interlocking part 20a formed integrally therewith and bent downward at the connecting shaft F at the lower end thereof and an interlocking part 20b formed integrally therewith and bent upward at the connecting shaft C at the upper end thereof.

A shock absorber 21 is provided between shafts G and H at the ends of the front and rear interlocking parts 19b and 20b provided at the upper ends of the front and rear torque arms 19 and 20, respectively. A connecting member 22 is provided between shafts B and D at the ends of the front and rear interlocking parts 19a and 20a provided at the lower ends of the front and rear torque arms 19 and 20, respectively. The connecting member 22 comprises, for example, a cylinder which can be extended and contracted in a telescoping fashion within a certain range. The range within which the connecting member 22 can be extended and contracted is determined such that the vertical range within which the slide rail 16 can be moved with respect to the body frame 7 is limited within a predetermined range.

In the above constitution, a four-node link 23 having the connecting shafts A and C at the upper ends of the front and rear torque arms 19 and 20 and the connecting shafts B and D at the lower ends of the front and rear torque arms 19 and 20 as nodes is constituted.

In the four-node link 23, the shaft (node) B is located below the shaft (node) E and the nodes A, B, C, and D constituting the four-node link 23 keep a quadrilateral configuration in its most contracted state shown in Fig. 2(B) in contrast to the example shown in Fig. 11(B), in which the parallelogram is flattened to a line in its most contracted state. Thus, sufficient strength can be maintained and a function as a four-node link against pitching can be maintained.

In this embodiment, only one connecting member 22 is provided at the middle of the right and left slide rails 16 and below the connecting shafts E and F, and only one shock absorber 21 is provided at the upper middle of the right and left slide rails 16. Thereby, the structure is simplified.

In another embodiment, the connecting member 22 may be provided with a shock absorbing function. For example, a shock absorber such as a hydraulic cylinder shock absorber or a rubber dumper which can be expanded and contracted within a certain range may be provided between the lower shafts B and D. Thereby, the structure can be further simplified.

In the present invention, additionally or alternatively two shock absorbers 24 and 25 may be attached to the front torque arm 19 and the rear torque arm 20, respectively, as shown in Fig. 2(C). Also, two connecting members 22 may be provided along the right and left slide rails 16, respectively.

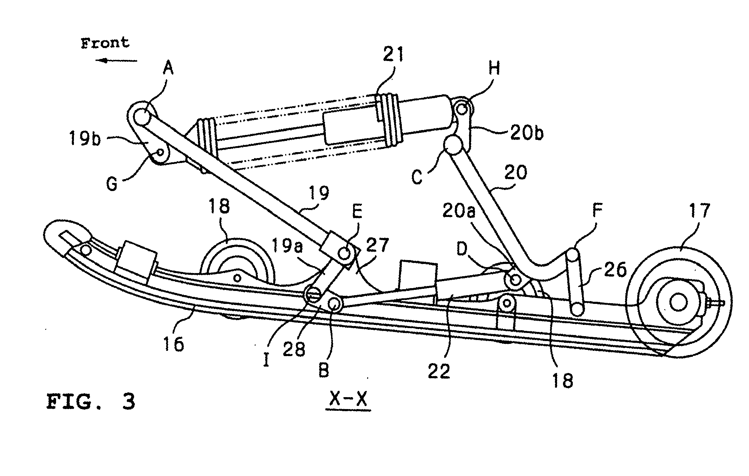

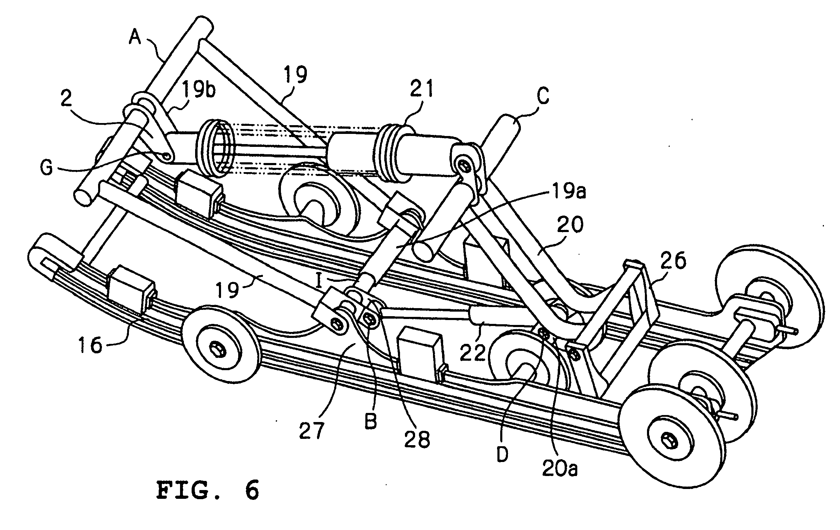

Fig. 3 to Fig. 6 are a side view, a plan view, a perspective view as seen obliquely from the front, and a perspective view as seen obliquely from the rear, respectively, of the inside of the rear suspension according to the present invention.

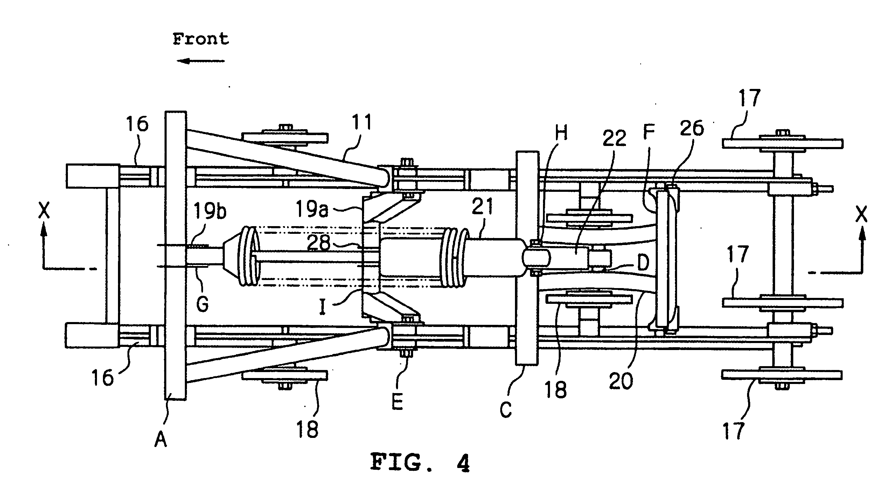

Fig. 3 is a view looking in the direction of the arrows X-X in Fig. 4. As shown in the inside side view of Fig. 3, the front torque arm 19 has the interlocking part 19b at the upper end thereof and movable integrally therewith. The front end of the shock absorber 21 is pivoted on the shaft G at an end of the interlocking part 19b.

The lower end of the front torque arm 19 is pivoted to a connecting-supporting part 27 formed integrally with the slide rail 16 and protruding upward via the connecting shaft E. At the lower end of the front torque arm 19 is provided the interlocking part 19a extending forward and downward therefrom and movable integrally therewith. To a shaft I at an end of the interlocking part 19a is secured an interlocking piece 28 movable integrally with the interlocking part 19a. The front end of the extendable connecting member 22 is pivoted on the shaft B at an end of the interlocking piece 28.

The rear torque arm 20 has a curved part in the vicinity of the lower end and the interlocking part 20a movable integrally therewith is provided on the curved part. The rear end of the connecting member 22 is pivoted to the interlocking part 20a. The curved end of the rear torque arm is pivoted on the connecting shaft F at the upper end of a stay 26 integrally secured to the slide rail 16. The rear torque arm 20 has the interconnecting part 20b movable integrally therewith at the upper end thereof. The rear end of the shock absorber 21 is pivoted to the interlocking part 20b.

As shown in Fig. 4, the shock absorber 21 is located between the pair of the right and left slide rails 16 and the connecting member 22 is located below the shock absorber 21.

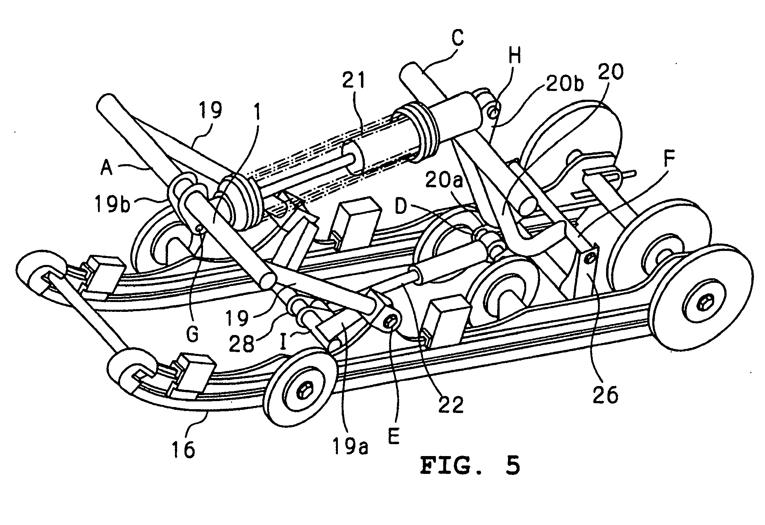

As shown in Fig. 4 to Fig. 6, the front torque arm 19 is provided for each of the right and left slide rails 16 and the upper ends thereof are connected by the connecting shaft A. The interlocking part 19b is provided on the middle of the shaft A and the front end of the shock absorber 21 is pivoted thereto as described before. The interlocking piece 28 is secured on the middle of the shaft I connecting the right and left interlocking parts 19a at the lower ends of the front torque arms 19 and the front end of the connecting member 22 is pivoted on the shaft B (Fig. 5) at the end of the interlocking piece 28. The rear end of the shock absorber 21 is pivoted on the shaft H disposed at the interlocking part 20b provided on the middle of the shaft C connecting the upper ends of the rear torque arms 20. The rear end of the connecting member 22 is pivoted to the interlocking part 20a provided on the lower curved parts of the rear torque arms 19 via the shaft D.

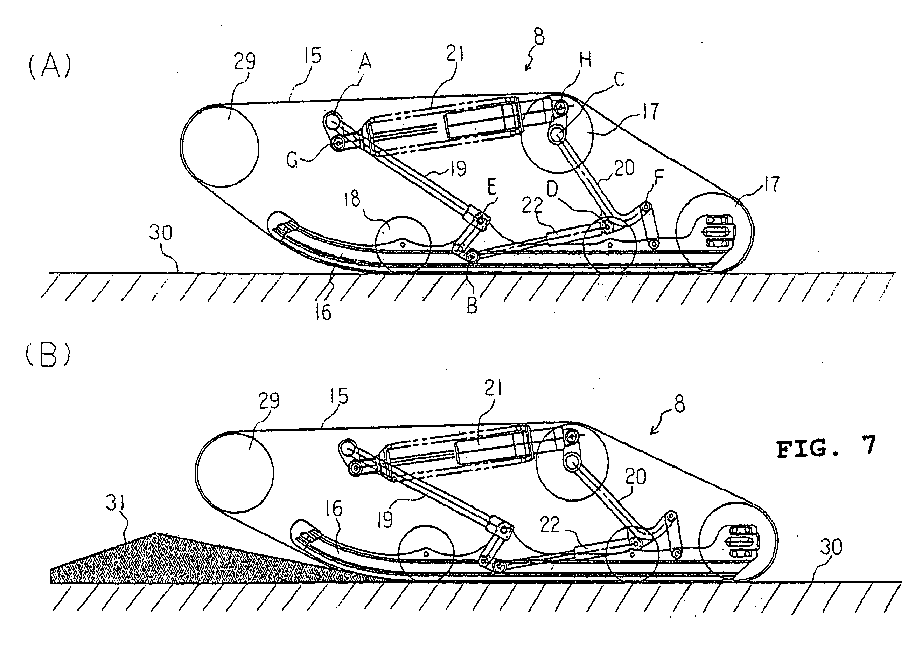

Fig. 7 to Fig. 9 are sequential explanatory views illustrating running behavior of the rear suspension for a snowmobile according to the present invention. The rear suspension 8 in the drawings has structure shown in Fig. 3 to Fig. 6.

Fig. 7(A) illustrates a state of the rear suspension where the snowmobile is running on a flat road surface 30 at high speed. The rear suspension 8 is extended vertically. The endless track belt 15 is driven by a driving wheel 29. The structure of the four-node link having four nodes A, B, C, and D connected by the front torque arm 19 and the rear torque arm 20 is the same as that of the four-node link shown in Fig. 2(A). The connecting shafts E and F at the lower ends of the front and rear torque arms 19 and 20 and connected to the slide rail 16 and the shafts G and H at the upper ends thereof, between which the shock absorber 21 is mounted, are arranged in the same manner as shown in Fig. 2(A). Fig. 7(B) shows a state where the rear suspension 8 runs barely onto a bump 31 on the road surface 30.

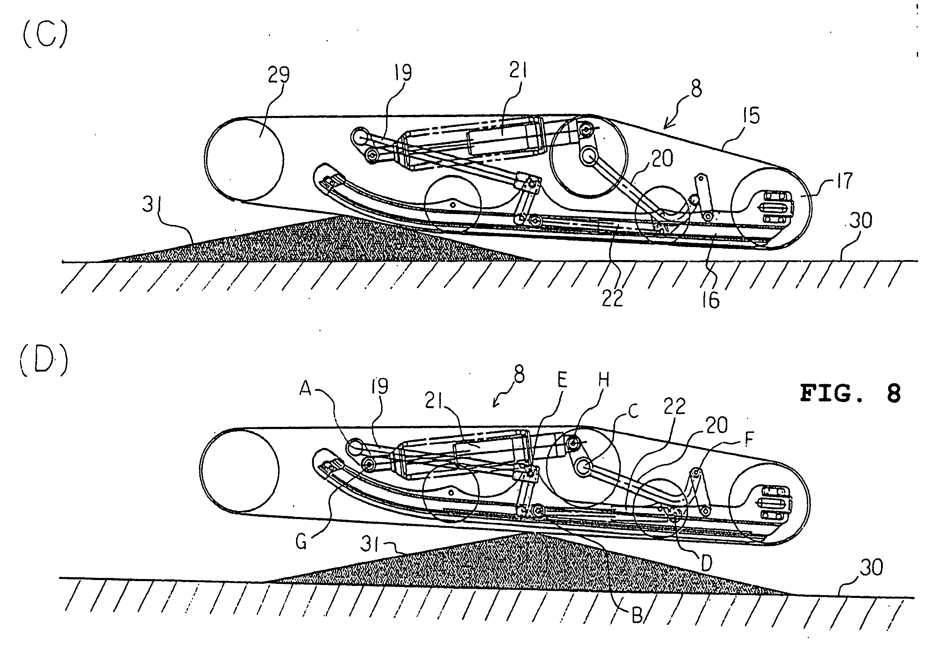

Fig. 8(C) shows a state where the front half of the rear suspension 8 runs onto the bump 31. Since the snowmobile is running at high speed, the guide rail 16 receives cushioning of the shock absorber 21 and the rear suspension 8 contracts upward, whereby the rear half of the guide rail 16 is raised off the ground. Fig. 8(D) shows a state where the approximate center of the rear suspension 8 has passed over the bump 31. At this time, the rear suspension 8 is in its most contracted state. The rear suspension 8 is kept almost horizontal. As described before, the front torque arm 19 is pressed from below by the bump 31 until it becomes almost horizontal when the body passes over the bump 31 at high speed. However, the shaft (node) B is still located below the connecting shaft E, so that the four-node link constituted of the nodes A, B, C, and D does not become flat but keeps a quadrilateral configuration. This ensures strength and effectively reduces pitching. Also, since the body is kept almost horizontal, riding comfort is improved.

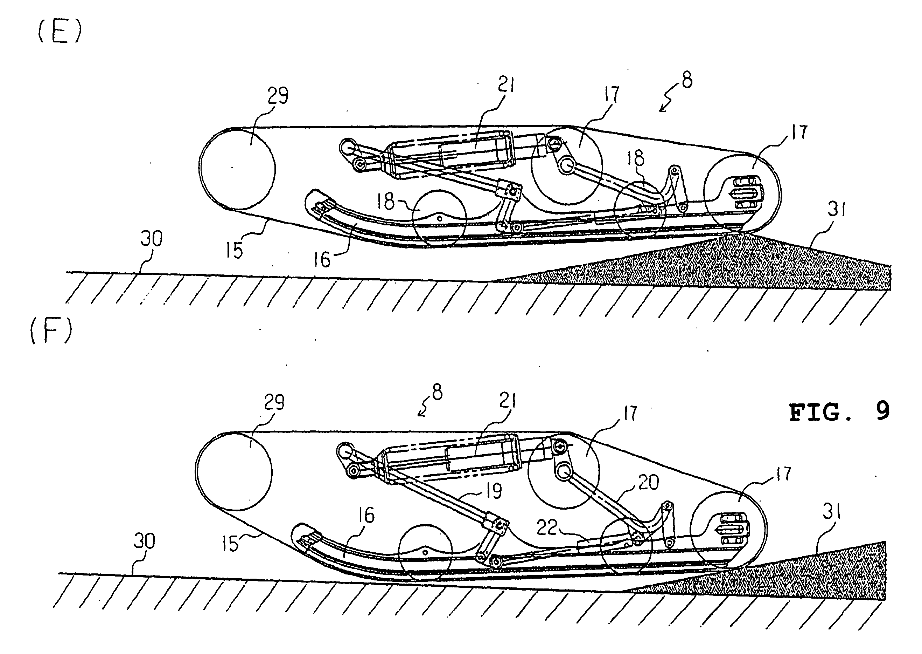

Fig. 9(E) shows a state where the rear end of the rear suspension 8 has almost passed over the bump 31. Since the snowmobile is running at high speed, the front half of the rear suspension 8 is still off the ground. Fig. 9(F) shows a state where the rear suspension 8 passed over the bump 31 and the front half thereof has landed on the road surface 30. By the action of the shock absorber 21, the rear suspension 8 starts extending vertically.

As explained in detail above, a rear suspension unit, in particular, for a snowmobile, is provided employing a four-node link formed by connecting a body frame and a pair of right and left slide rails disposed below the body frame to upper and lower ends, respectively, of a front torque arm and a rear torque arm so that the vertical distance between the body frame and the slide rails can be increased and decreased by the four-node link, characterized in that the front torque arm has a front interlocking part rotatable integrally therewith below a connecting shaft disposed at a lower end thereof, in that the rear torque arm has a rear interlocking part rotatable integrally therewith in the vicinity of a connecting shaft disposed at a lower end thereof, and in that connecting means which can be extended and contracted within a prescribed range is provided between the front interlocking part and the rear interlocking part.

As has been further described above the four-node link can be large in configuration, and the load exerted on each part of the link structure is decreased. Thus, the rear suspension can be reduced in weight and cost. Also, since the four-node link can keep a parallelogram configuration even in its most contracted state, the rear suspension exhibits sufficient strength and can ensure a comfortable ride. In addition, the rear suspension exhibits an effect of moderately reducing pitching within a practical range.

In the case where one connecting means (connecting member 22) is provided below the connecting shafts E and F disposed at the lower ends of the front and rear torque arms and between the pair of the right and left slide rails 16, the number of parts of the connecting means can be reduced. Thus, the connecting means can be simplified in structure and length adjustment and attachment thereof can be facilitated.

In the case where the connecting means (connecting member 22) has a shock absorbing function, space can be used efficiently and degree of freedom in laying out parts around the link can be improved as compared with the case where a shock absorber is separately provided. The shock absorbing function improves the ability of the rear suspension to adhere to the road surface during low-speed running and prevents pitching of the slide rails or the body frame during high-speed running.

Accordingly, in order to provide a rear suspension structure for a snowmobile employing a four-node link with a quadrilateral configuration which is sufficiently large to disperse load and thus exhibits improved strength against load and which always maintains a quadrilateral configuration and thus can be extended and contracted in an optimum manner, the structure having simple and thus light structure, a rear suspension unit 8 for a snowmobile employs a four-node link 23 formed by connecting a body frame 7 and a pair of right and left slide rails 16 disposed below the body frame 7 to upper and lower ends, respectively, of a front torque arm 19 and a rear torque arm 20 so that the vertical distance between the body frame 7 and the slide rails 16 can be increased and decreased by the four-node link 23, wherein the front torque arm 19 has a front interlocking part 19a rotatable integrally therewith below a connecting shaft E disposed at a lower end thereof, wherein the rear torque arm 20 has a rear interlocking part 20a rotatable integrally therewith in the vicinity of a connecting shaft F disposed at a lower end thereof, and wherein connecting means 22 which can be extended and contracted within a prescribed range is provided between the front interlocking part 19a and the rear interlocking part 20a.

## Claims

1. A suspension unit, in particular for a rear section of a snowmobile, comprising a four-node link (A,E,C,F), wherein respective upper end portions of a front torque arm (19) and of a rear torque arm (20) are rotatably connected to a body frame (7), and wherein respective lower end portions of the front torque arm (19) and of the rear torque arm (20) are rotatably connected to a drive unit (16, 16) disposed below said body frame (7), **characterized in that** said suspension unit, in addition to said four-node link (A,E,C,F), further comprises a connecting means (22) of a variable length which is rotatably connected to the respective lower end portions of the front torque arm (19) and of the rear torque arm (20).

2. Suspension unit according to claim 1, **characterized in that** said connecting means (22) can be extended and contracted within a predetermined range.

3. Suspension unit according to claim 1 or 2, **characterized in that** said front torque arm (19) comprises a lower front interlocking part (19a,28) formed at a lower end portion thereof and rotatable integrally therewith.

4. Suspension unit according to claim 3, **characterized in that** said lower front interlocking part (19a,28) is formed in the vicinity of a connecting shaft (E) which rotatably connects the lower end portion of the front torque arm (19) to the drive unit (16, 16).

5. Suspension unit according to one of the claims 1 to 4, **characterized in that** said rear torque arm (20) comprises a lower rear interlocking part (20a) formed at a lower end portion thereof and rotatable integrally therewith.

6. Suspension unit according to claim 5, **characterized in that** said lower rear interlocking part (20a) is formed in the vicinity of a connecting shaft (F) which rotatably connects the lower end portion of the rear torque arm (20) to the drive unit (16, 16).

7. Suspension unit according to claim 5, **characterized in that** said rear torque arm (20) comprises a curved part in the vicinity of its lower end portion, the lower rear interlocking part (20a) being provided on said curved part.

8. Suspension unit according to claim 6 or 7, when being dependend on claims 3 and 5, **characterized in that** said connecting means (22) is provided between an end section of said front interlocking part (19a,28) and said rear interlocking part (20a).

9. Suspension unit according to one of the claims 1 to 8, **characterized in that** said drive unit comprises a pair of right and left slide rails (16,16) for guiding a propulsion track belt (15).

10. Suspension unit according to claim 9, **characterized in that** a pair of right and left front torque arms (19,19) and a pair of right and left rear torque arms (20,20) are arranged between the body frame (7) and the respective right and left slide rails (16,16) of the drive unit.

11. Suspension unit according to claim 10, **characterized in that** only one connecting means (22) is provided between the pairs of torque arms (19,20), being disposed between said right and left slide rails (16,16).

12. Suspension unit according to one of the claims 10 or 11, **characterized in that** said connecting means (22) is arranged between a lower front shaft (B) and a lower rear shaft (D) of a second four-node link (A,B,C,D).

13. Suspension unit according to one of the claims 1 to 12, **characterized in that** said connecting means (22) comprises a shock absorber.

14. Suspension unit according to one of the claims 1 to 13, **characterized in that** said front torque arm (19) comprises an upper front interlocking part (19b) formed at an upper end portion thereof and rotatable integrally therewith.

15. Suspension unit according to claim 14, **characterized in that** said upper front interlocking part (19b) is formed in the vicinity of a connecting shaft (A) which rotatably connects the upper end portion of the front torque arm (19) to the body frame (7).

16. Suspension unit according to one of the claims 1 to 15, **characterized in that** said rear torque arm (20) comprises an upper rear interlocking part (20b) formed at an upper end portion thereof and rotatable integrally therewith.

17. Suspension unit according to claim 16, **characterized in that** said upper rear interlocking part (20b) is formed in the vicinity of a connecting shaft (C) which rotatably connects the upper end portion of the rear torque arm (20) to the body frame (7).

18. Suspension unit according to claim 17, when being dependent on claim 14, **characterized in that** said further connecting means, preferably comprising a shock absorber (21), is provided between an end section of said upper front interlocking part (19b) and an end section of said upper rear interlocking part (20b).

19. Suspension unit according to one of the claims 1 to 18, **characterized in that** two shock absorbing means (24,25) are attached to said front torque arm (19) and to said rear torque arm (20), respectively.

20. Snowmobile comprising a body (2), a steering device (4,5,14) arranged at a front end of the body (2) and a drive section disposed at a rear end of the body (2), **characterized by** comprising a suspension unit (8) according to at least one of the claims 1 to 19.

## Patentansprüche

1. Aufhängungseinheit, insbesondere für einen hinteren Abschnitt eines Schneemobiles, aufweisend eine Vier- Knotenverbindung (A, E, C, F), wobei jeweilige obere Endabschnitte eines vorderen Drehmomentarmes (19) und eines hinteren Drehmomentarmes (20) drehbar mit einem Karosserierahmen (7) verbunden sind, und wobei untere Endabschnitte des vorderen Drehmomentarmes (19) und des hinteren Drehmomentarmes (20) drehbar mit einer Antriebseinheit (16, 16), angeordnet unter dem Karosserierahmen (7), verbunden sind, **dadurch gekennzeichnet, dass** die Aufhängungseinheit, zusätzlich zu der Vier- Knotenverbindung (A, E, C, F) außerdem eine Verbindungseinrichtung (22) von einer variablen Länge aufweist, die drehbar mit den jeweiligen unteren Endabschnitten des vorderen Drehmomentarmes (19) und des hinteren Drehmomentarmes (20) verbunden ist.

2. Aufhängungseinheit nach Anspruch 1, **dadurch gekennzeichnet, dass** die Verbindungseinrichtung (22) innerhalb eines vorbestimmten Bereiches verlängert oder verkürzt werden kann.

3. Aufhängungseinheit nach Anspruch 1 oder 2, **dadurch gekennzeichnet, dass** der vordere Drehmomentarm (19) ein unteres vorderes Verriegelungsteil (19a, 28), gebildet an einem unteren Endabschnitt desselben, und mit diesem einstückig drehbar, aufweist.

4. Aufhängungseinheit nach Anspruch 3, **dadurch gekennzeichnet, dass** das untere vordere Verriegelungsteil (19a, 28) in der Nähe einer Verbindungswelle (E) gebildet ist, die drehbar den unteren Endabschnitt des vorderen Drehmomentarmes (19) mit der Antriebseinheit (16, 16) verbindet.

5. Aufhängungseinheit nach einem der Ansprüche 1 bis 4, **dadurch gekennzeichnet, dass** der hintere Drehmomentarm (20) ein unteres hinteres Verriegelungsteil (20a), gebildet an einem unteren Endabschnitt desselben, und mit diesem einstückig drehbar, aufweist.

6. Aufhängungseinheit nach Anspruch 5, **dadurch gekennzeichnet, dass** das untere hintere Verriegelungsteil (20a) in der Nähe einer Verbindungswelle (F) gebildet ist, die drehbar den unteren Endabschnitt des hinteren Drehmomentarmes (20) mit der Antriebseinheit (16, 16) verbindet.

7. Aufhängungseinheit nach Anspruch 5, **dadurch gekennzeichnet, dass** der hintere Drehmomentarm (20) ein gekrümmtes Teil in der Nähe seines unteren Endabschnittes aufweist, wobei das untere hintere Verriegelungsteil (20a) an dem gekrümmten Teil vorgesehen ist.

8. Aufhängungseinheit nach Anspruch 6 oder 7, wenn abhängig von den Ansprüchen 3 und 5, **dadurch gekennzeichnet, dass** die Verbindungseinrichtung (22) zwischen einem Endabschnitt des vorderen Verriegelungsteils (19a, 28) und dem hinteren Verriegelungsteil (20a) vorgesehen ist.

9. Aufhängungseinheit nach einem der Ansprüche 1 bis 8, **dadurch gekennzeichnet, dass** die Antriebseinheit ein Paar von rechten und linken Gleitschienen (16, 16) zum Führen eines Vortriebsspurriemengurtes (15) aufweist.

10. Aufhängungseinheit nach Anspruch 9, **dadurch gekennzeichnet, dass** ein Paar von rechten und linken vorderen Drehmomentarmen (19, 19) und ein Paar von rechten und linken hinteren Drehmomentarmen (20, 20) zwischen dem Karosserierahmen (7) und den jeweiligen rechten und linken Gleitschienen (16, 16) der Antriebseinheit angeordnet sind.

11. Aufhängungseinheit nach Anspruch 10, **dadurch gekennzeichnet, dass** nur eine Verbindungseinrichtung (22) zwischen den Drehmomentarmpaaren (19, 20), die zwischen den rechten und linken Gleitschienen (16, 16) angeordnet sind, vorgesehen ist.

12. Aufhängungseinheit nach einem der Ansprüche 10 oder 11, **dadurch gekennzeichnet, dass** die Verbindungseinrichtung (22) zwischen einer unteren vorderen Welle (B) und einer unteren hinteren Welle (D) einer zweiten Vier- Knotenverbindung (A, B, C, D) angeordnet ist.

13. Aufhängungseinheit nach einem der Ansprüche 1 bis 12, **dadurch gekennzeichnet, dass** die Verbindungseinrichtung (22) einen Stoßdämpfer aufweist.

14. Aufhängungseinheit nach einem der Ansprüche 1 bis 13, **dadurch gekennzeichnet, dass** der vordere Drehmomentarm (19) ein oberes vorderes Verriegelungsteil (19b), gebildet an einem oberen Endabschnitt desselben, und mit diesem einstückig drehbar, aufweist.

15. Aufhängungseinheit nach Anspruch 14, **dadurch gekennzeichnet, dass** das obere vordere Verriegelungsteil (19b) in der Nähe einer Verbindungswelle (A) gebildet ist, die drehbar den oberen Endabschnitt des vorderen Drehmomentarms (19) mit dem Karosserierahmen (7) verbindet.

16. Aufhängungseinheit nach einem der Ansprüche 1 bis 15, **dadurch gekennzeichnet, dass** der hintere Drehmomentarm (20) ein oberes hinteres Verriegelungsteil (20b) gebildet an einem oberen Endabschnitt desselben, und mit diesem einstückig drehbar, aufweist.

17. Aufhängungseinheit nach Anspruch 16, **dadurch gekennzeichnet, dass** das obere hintere Verriegelungsteil (20b) in der Nähe einer Verbindungswelle (C) gebildet ist, die drehbar den oberen Endabschnitt des hinteren Drehmomentarms (20) mit dem Karosserierahmen (7) verbindet.

18. Aufhängungseinheit nach Anspruch 17, wenn abhängig von Anspruch 14, **dadurch gekennzeichnet, dass** die weitere Verbindungseinrichtung, die vorzugsweise einen Stoßdämpfer (21) aufweist, zwischen einem Endabschnitt des oberen vorderen Verriegelungsteil (19b) und einen Endabschnitt des oberen hinteren Verriegelungsteils (20b) vorgesehen ist.

19. Aufhängungseinheit nach einem der Ansprüche 1 bis 18, **dadurch gekennzeichnet, dass** zwei Stoßdämpfer (24, 25) jeweils mit dem vorderen Drehmomentarm (19) und dem hinteren Drehmomentarm (20) jeweils verbunden sind.

20. Schneemobil, aufweisend eine Karosserie (2), eine Lenkvorrichtung (4, 5, 14), angeordnet an einem vorderen Ende der Karosserie (2), und einen Antriebsabschnitt, angeordnet an einem hinteren Ende der Karosserie (2), **gekennzeichnet durch** eine Aufhängungseinheit (8) nach zumindest einem der Ansprüche 1 bis 19.

## Revendications

1. Dispositif de suspension, destiné en particulier à une section arrière d'un scooter des neiges, comprenant une articulation à quatre noeuds (A, E, C, F), dans lequel des parties respectives d'extrémité supérieure d'une barre de poussée avant (19) et d'une barre de poussée arrière (20) sont connectées de manière à pouvoir tourner à un châssis de corps (7), et dans lequel des parties respectives d'extrémité inférieure de la barre de poussée avant (19) et de la barre de poussée arrière (20) sont connectées de manière à pouvoir tourner à un ensemble d'entraînement (16, 16) disposé en dessous dudit châssis de corps (7), **caractérisé en ce que** ledit dispositif de suspension, en complément à ladite articulation à quatre noeuds (A, E, C, F), comprend en outre des moyens de connexion (22) de longueur variable qui sont connectés de manière à pouvoir tourner aux parties respectives d'extrémité inférieure de la barre de poussée avant (19) et de la barre de poussée arrière (20).

2. Dispositif de suspension selon la revendication 1, **caractérisé en ce que** lesdits moyens de connexion (22) peuvent se détendre et se rétracter à l'intérieur d'une plage prédéterminée.

3. Dispositif de suspension selon la revendication 1 ou la revendication 2, **caractérisé en ce que** ladite barre de poussée avant (19) comprend une partie de verrouillage inférieure avant (19a, 28) formée sur une partie d'extrémité inférieure de celle-ci et pouvant tourner intégralement avec celle-ci.

4. Dispositif de suspension selon la revendication 3, **caractérisé en ce que** ladite partie de verrouillage inférieure avant (19a, 28) est formée à proximité d'un arbre de connexion (E) qui connecte de manière à ce qu'elle puisse tourner la partie d'extrémité inférieure de la barre de poussée avant (19) à l'ensemble d'entraînement (16, 16).

5. Dispositif de suspension selon l'une des revendications 1 à 4, **caractérisé en ce que** ladite barre de poussée arrière (20) comprend une partie de verrouillage inférieure arrière (20a) formée sur une partie d'extrémité inférieure de celle-ci et pouvant tourner intégralement avec celle-ci.

6. Dispositif de suspension selon la revendication 5, **caractérisé en ce que** ladite partie de verrouillage inférieure arrière (20a) est formée à proximité d'un arbre de connexion (F) qui connecte de manière à ce qu'elle puisse tourner la partie d'extrémité inférieure de la barre de poussée arrière (20) à l'ensemble d'entraînement (16, 16).

7. Dispositif de suspension selon la revendication 5, **caractérisé en ce que** ladite barre de poussée arrière (20) comprend une partie courbe située à proximité de sa partie d'extrémité inférieure, la partie de verrouillage inférieure arrière (20a) étant aménagée sur ladite partie courbe.

8. Dispositif de suspension selon la revendication 6 ou la revendication 7, qui, lorsqu'il dépend des revendications 3 et 5, est **caractérisé en ce que** lesdits moyens de connexion (22) sont aménagés entre une section d'extrémité de ladite partie de verrouillage avant (19a, 28) et ladite partie de verrouillage arrière (20a).

9. Dispositif de suspension selon l'une des revendications 1 à 8, **caractérisé en ce que** ledit ensemble d'entraînement comprend une paire de rails de glissement droit et gauche (16, 16) destinés à guider une chenille de propulsion (15).

10. Dispositif de suspension selon la revendication 9, **caractérisé en ce qu'**une paire de barres de poussée avant droite et gauche (19, 19) et une paire de barres de poussée arrière droite et gauche (20, 20) sont aménagées entre le châssis de corps (7) et les rails de glissement respectifs droit et gauche (16, 16) de l'ensemble d'entraînement.

11. Dispositif de suspension selon la revendication 10, **caractérisé en ce qu'**un seul des moyens de connexion (22) est aménagé entre les paires de barres de poussée (19, 20), celui-ci étant disposé entre lesdits rails de glissement droit et gauche (16, 16).

12. Dispositif de suspension selon l'une des revendications 10 ou 11, **caractérisé en ce que** lesdits moyens de connexion (22) sont aménagés entre un arbre avant inférieur (B) et un arbre arrière inférieur (D) d'une seconde articulation à quatre noeuds (A, B, C, D).

13. Dispositif de suspension selon l'une des revendications 1 à 12, **caractérisé en ce que** lesdits moyens de connexion (22) comprennent un amortisseur de chocs.

14. Dispositif de suspension selon l'une des revendications 1 à 13, **caractérisé en ce que** ladite barre de poussée avant (19) comprend une partie de verrouillage supérieure avant (19b) formée sur une partie d'extrémité supérieure de celle-ci de manière à ce qu'elle puisse tourner intégralement avec celle-ci.

15. Dispositif de suspension selon la revendication 14, **caractérisé en ce que** ladite partie de verrouillage inférieure avant (19b) est formée à proximité d'un arbre de connexion (A) qui connecte de manière à ce qu'elle puisse tourner la partie d'extrémité supérieure de la barre de poussée avant (19) au châssis de corps (7).

16. Dispositif de suspension selon l'une des revendications 1 à 15, **caractérisé en ce que** ladite barre de poussée arrière (20) comprend une partie de verrouillage supérieure arrière (20b) formée sur une partie d'extrémité supérieure de celle-ci de manière à ce qu'elle puisse tourner intégralement avec celle-ci.

17. Dispositif de suspension selon la revendications 16, **caractérisé en ce que** ladite partie de verrouillage supérieure arrière (20b) est formée à proximité d'un arbre de connexion (C) qui connecte de manière à ce qu'elle puisse tourner la partie d'extrémité supérieure de la barre de poussée arrière (20) au châssis de corps (7).

18. Dispositif de suspension selon la revendication 17, qui, lorsqu'il dépend de la revendication 14, est **caractérisé en ce que** lesdits autres moyens de connexion, qui comprennent de préférence un amortisseur de chocs (21), sont aménagés entre une section d'extrémité de ladite partie de verrouillage supérieure avant (19b) et une section d'extrémité de ladite partie de verrouillage supérieure arrière (20b).

19. Dispositif de suspension selon l'une quelconque des revendications 1 à 18, **caractérisé en ce que** deux moyens d'amortissement de chocs (24, 25) sont fixés respectivement sur ladite barre de poussée avant (19) et sur ladite barre de poussée arrière (20).

20. Scooter des neiges comprenant un corps (2), un dispositif de direction (4, 5, 14) aménagé sur une extrémité avant du corps (2), et une section d'entraînement disposée sur une extrémité arrière du corps (2), **caractérisé en ce qu'**il comprend un dispositif de suspension (8) selon au moins l'une des revendications 1 à 19.
